# EUROPEAN PATENT APPLICATION

(11) **EP 2 431 649 A2**
(43) Date of publication of application: **21.03.2012**
(21) Application number: 11275105.2
(22) Date of filing: 02.08.2011
(51) Int. Cl.: F16L 59/153

(54) **Pipe Insulation**

(30) Priority: 17.09.2010 GB 1015591
(71) Applicant: Wills, Dave, Hyde cheshire SK14 5LN (GB)
(72) Inventor: Wills, Dave, Hyde cheshire SK14 5LN (GB)
(74) Representative: Wilson Gunn

(57) **Abstract**

Pipe insulation (1) adapted to be inserted into a pipe (30) having a conduit (3) through which fluid may flow and insulating means (5) which is disposed to the outside of the conduit (3) and arranged such that, when the pipe insulation (1) is inserted into a pipe (30), the insulating means (5) serves to restrict the transfer of thermal energy between the conduit (3) and the pipe (30). The conduit (3) and the pipe (30) are flexible. The conduit (3) may be a flexible, ribbed, hollow tube made from polypropylene plastics material and the insulation means (5) may be a length of flexible, foamed, closed cell polyethylene of substantially annular cross section which that surrounds and extends along the length of the conduit (3).

## Description

The present invention relates to pipe insulation which may be used, for example, with condensate pipes of condensing boilers.

During normal operation of a condensing boiler, condensate, which is mildly acidic, is formed in the heat exchanger and flue. This condensate must be safely disposed of to ensure correct operation of the boiler and so a condensate drain pipe is normally provided to drain the condensate away. When run internally into a dwelling, a nominal diameter of 22mm for the drain pipe should be used. Often, though, the drain pipe runs outside the property in which the boiler is installed where it is exposed to potentially low temperatures that can cause water in the pipe to freeze and block the pipe. Thus, for externally run drain pipes, a minimum nominal diameter of 32mm is used to reduce the risk of the pipe icing up and becoming blocked.

However, whilst 32mm is usually a large enough diameter to prevent the pipe from blocking in a normal British winter, when temperatures are unusually low, such as in the winter of 2009, this can still occur.

One solution to this problem is to wrap pipe insulation around the external drain pipe to shield the pipe from low temperatures. This has the desired effect of reducing the likelihood of the pipe freezing in low temperatures but further increases the diameter of the combined pipe and insulation, thereby making it even more unsightly on the side of a dwelling. Furthermore, since the pipe often has one or more bends, the insulation must be soft and flexible to effectively wrap the length of the pipe. This is also undesirable because its soft outer casing is not sufficiently robust to withstand the external environment.

An object of the present invention is to provide pipe insulation that mitigates the above difficulties.

According to a first aspect of the present invention, there is provided pipe insulation adapted to be inserted into a pipe comprising a conduit through which fluid may flow and insulating means disposed to the outside of the conduit and arranged such that, when the pipe insulation is inserted into a pipe, the insulating means serves to restrict the transfer of thermal energy between the conduit and the pipe, wherein the conduit and the insulating means are flexible.

Advantageously, the diameter of the pipe into which the insulation is inserted is not increased by the addition of the insulation thereby keeping the pipe diameter to a minimum whilst improving its resistance to icing up in low temperatures. Furthermore, the pipe insulation is protected from the environment by the pipe and so is not exposed to adverse conditions that might impair its insulating properties.

The insulating means may comprise a material having insulating properties. The material may be a foamed plastics material. The plastics material may be polyethylene. The plastics material may be a closed cell, foamed plastics material. Alternatively, the material may be rubber.

The insulating means may comprise one or more formations arranged, in use, to space the outside of the conduit from the pipe. The material may cover at least a substantial part of the conduit. The material may be substantially annular in cross section. The material may be resiliently compressible.

The conduit may be substantially circular in cross section. The diameter of the conduit may vary along its length. The conduit may be ribbed. The conduit may be corrugated. The ribs and insulating means may be arranged to define chambers inside which air may be trapped. The conduit may comprise polypropylene plastics material.

According to a second aspect of the present invention, there is provided a pipe containing pipe insulation according to the first aspect of the present invention. The pipe may be a condensate drain pipe.

According to a third aspect of the present invention, there is provided a heating appliance having a condensate drain pipe, wherein pipe insulation according to the first aspect of the present invention is disposed inside the drain pipe.

According to a fourth aspect of the present invention, there is provided a method of insulating a pipe comprising the steps of:
providing a length of pipe insulation according to the first aspect; and
inserting the pipe insulation into the pipe.

The method may further comprise the step of connecting the pipe insulation to the inlet of the pipe. The method may further comprise the step of arranging the pipe insulation so that the inlet is connected to the conduit.

In order that the invention may be more clearly understood embodiments thereof will now be described by way of example with reference to the accompanying drawings, in which:

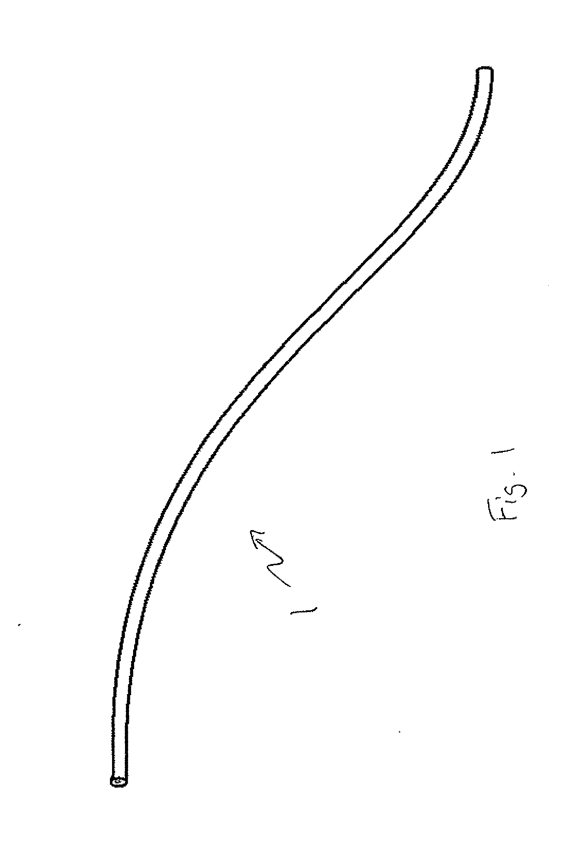

- Fig. 1: is a perspective view of a length of pipe insulation according to the invention;

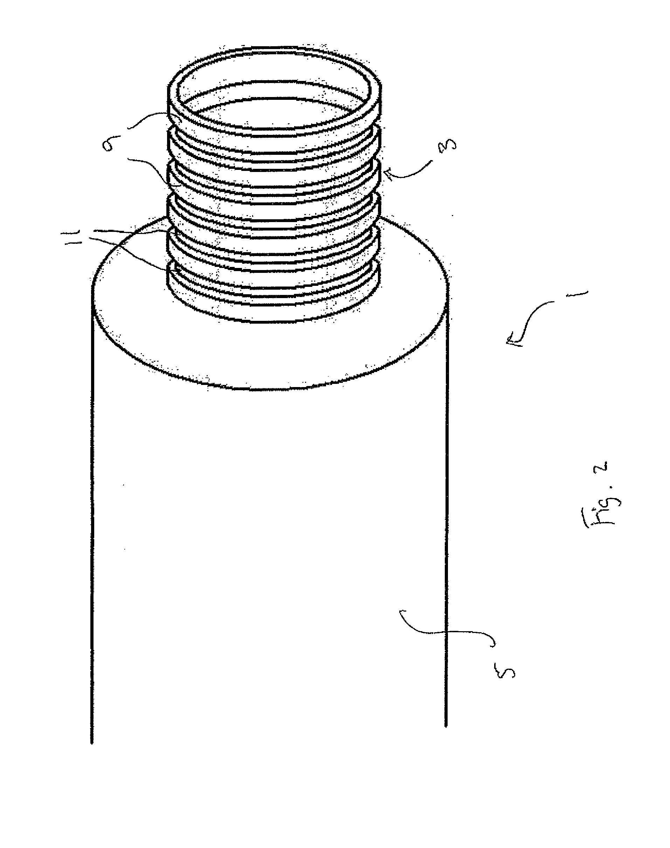

- Fig. 2: is an enlarged perspective view of one end of the pipe insulation shown in Fig. 1 with some insulating material removed;

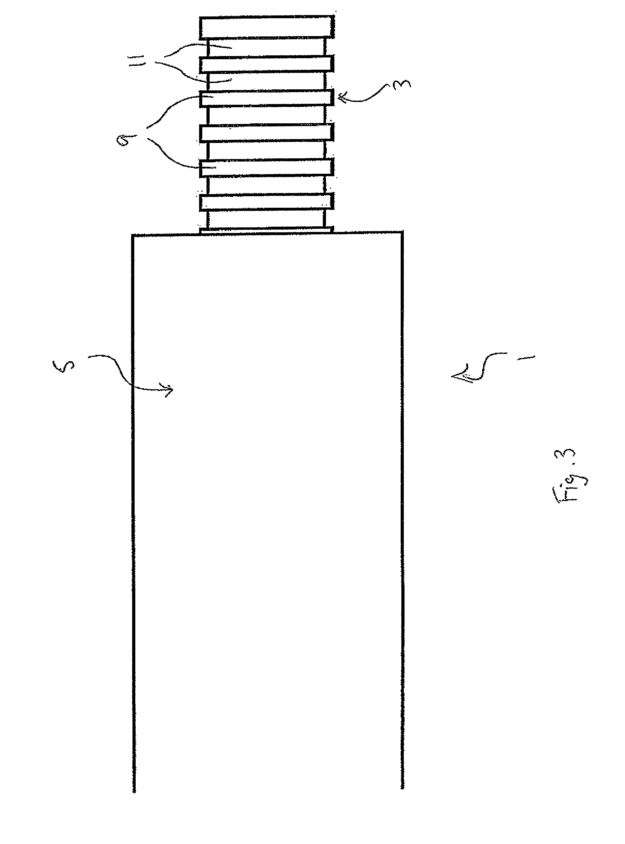

- Fig. 3: is a side view of the pipe insulation shown in Fig. 2;

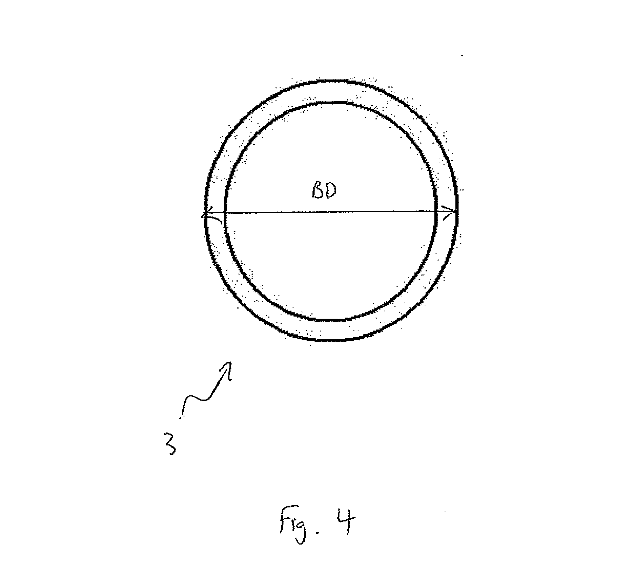

- Fig. 4: is an end view of the conduit of the pipe insulation shown in Fig. 2;

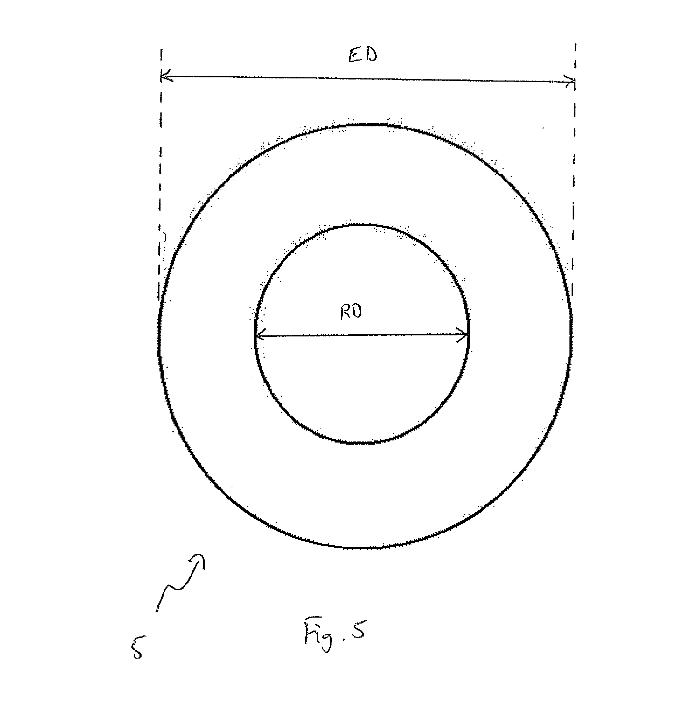

- Fig. 5: is an end view of the insulating material of the pipe insulation shown in Fig. 2;

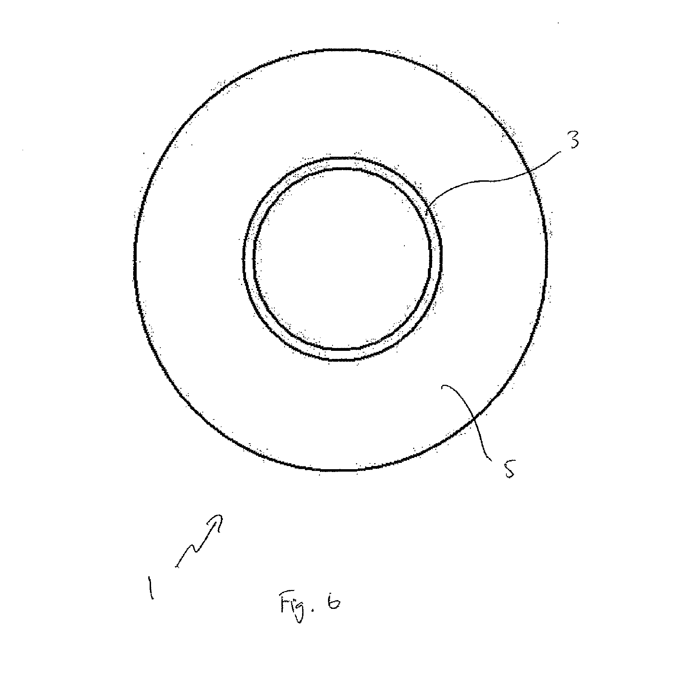

- Fig. 6: is an end view of the pipe insulation shown in Fig. 2;

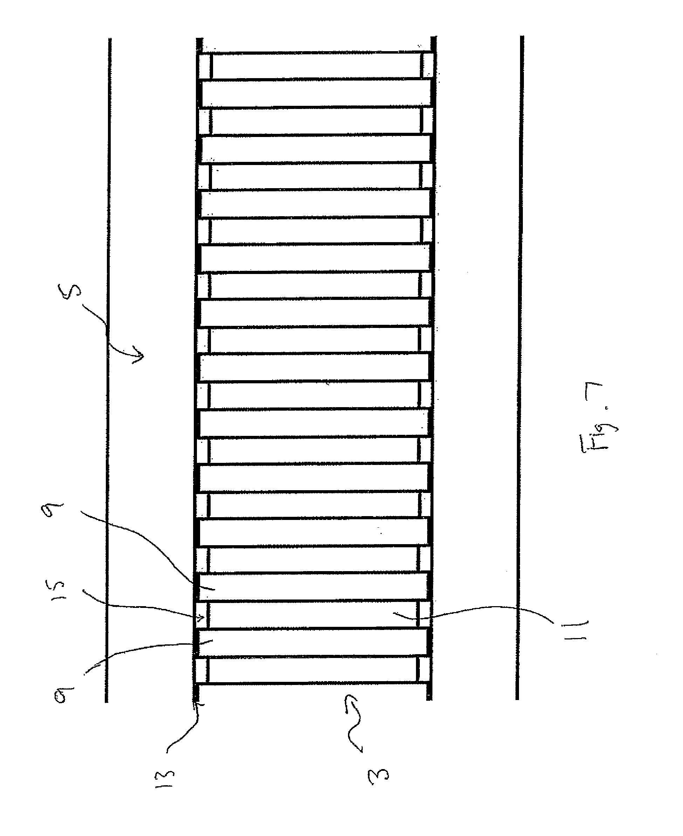

- Fig. 7: is an enlarged cross sectional view of a part of the pipe insulation shown in Fig. 1;

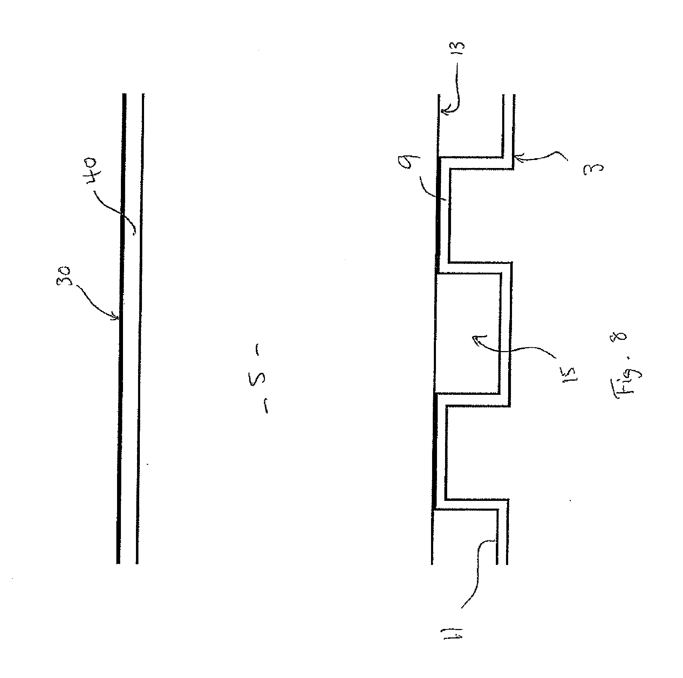

- Fig. 8: is an even more enlarged cross sectional view of a part of the pipe insulation shown in Fig. 1; and

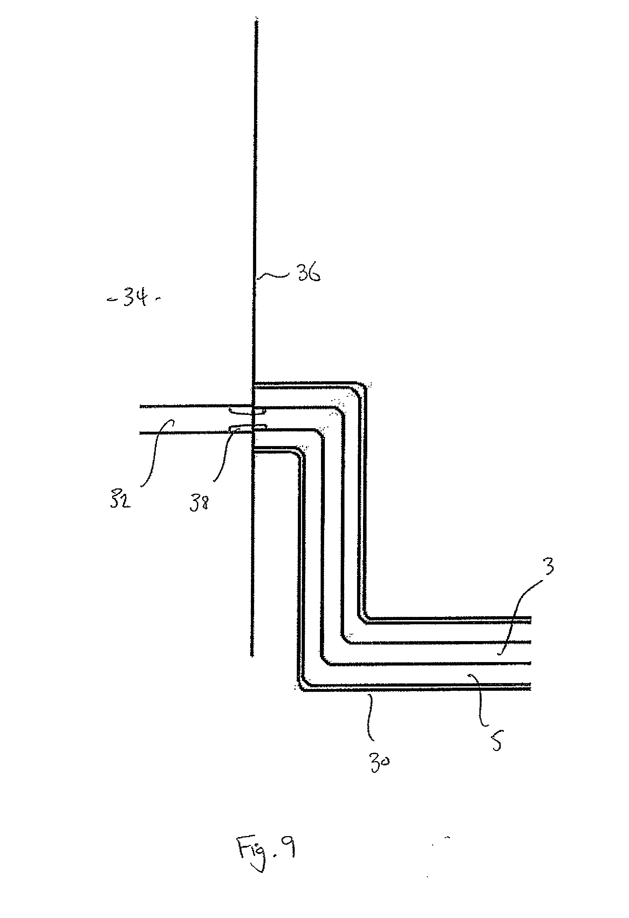

- Fig. 9: is a cross sectional view of a length of the pipe insulation shown in Fig. 1 when installed in a condensate drain pipe.

Referring to the drawings there is shown pipe insulation 1 comprising a conduit 3 and insulating means 5 which takes the form of a layer of insulating material 5 disposed to the outside of the conduit 3 and covering at least a substantial part of the conduit 3 to provide thermal insulation. The conduit 3 comprises a flexible, hollow, ribbed tube made from polypropylene plastics material. The conduit 3 is also substantially water impermeable to enable condensate to flow down its interior without leaking. The layer of insulating material 5 comprises a length of flexible, foamed, closed cell polyethylene (PE) of substantially annular cross section having a durable PE-film covering.

The insulating material 5 has a central through hole 7 running the length of the material 5 whose internal diameter RD, which in this embodiment is 20mm, is substantially equal to the largest external diameter BD of the conduit 3. The conduit 3 is inserted through the hole 7 of the insulating material 5 such that it runs the length of the material 5 from one end to the other. Since the largest external diameter BD of the conduit 3 is substantially equal to the diameter of the central hole 7, the conduit 3 is held in place within the insulating material 5 by interference fit. It may additionally be held in place with the aid of an adhesive.

The insulating material 5 is chosen such that its external diameter ED is substantially equal to the internal diameter of a condensate drain pipe 30 so that it can be inserted into the drain pipe 30 and held in place by interference fit. The diameter of the material 5 is therefore chosen to be approximately 28mm. The material 5 is chosen such that it is sufficiently resilient and flexible to bend with the conduit 3 and conform to the shape of a drain pipe 30 which may have bends along its length. The insulating material 5 is resiliently compressible so that it can be squeezed into a drain pipe 30 where it returns to its natural state and is held in place.

The conduit 3 comprises a plurality of substantially parallel spaced apart ribs 9 that extend around the circumference of the conduit 3 along its length. Each rib 9 is separated by a depression 11 which is approximately equal in width to the width of a rib 9. The conduit 3 is constructed such that its internal wall is the negative of the external wall. In other words, a depression 11 on the external wall corresponds to a rib on the internal wall and a rib 9 on the external wall corresponds to a depression on the internal wall. When the conduit 3 is inserted into the insulating material 5, a depression 11, two ribs 9 and the adjacent inner wall 13 of the material 5 together form a channel 15 which encircles the conduit 3, inside which is trapped a pocket of air. The trapped air in each chamber 15 serves to provide a further layer of insulation between the conduit interior 3 and the condensate pipe exterior.

The depressions 11 that join the ribs 9 together are sufficiently thin to flex under external pressure but the material is resilient enough that each depression returns to its non-flexed state when pressure is released. The depressions 11 therefore act as a hinge for the ribs 9 so that one rib 9 can move relative to an adjacent rib 9. The conduit 3 can therefore be flexed, bent and curved without kinking thereby permitting it to conform to the shape of a condensate drain pipe 30. The conduit 3 also serves as a spine or skeleton for the insulating material 5 which moves with the conduit 3.

Not only does the flexibility of the pipe insulation 1 enable it to conform to the shape of a condensate pipe, it also enables the pipe insulation 1 to be wound around a spool that occupies a relatively small footprint. Large lengths of pipe insulation may therefore be easily transported in, for example, a van.

In use, a pipe insulation installer determines the length of pipe insulation 1 required to line the internal length of a condensate drain pipe 30 from its outlet to its inlet which is connected to the internally run pipe 32 of a dwelling 34 in which the condensing boiler is installed. The installer then cuts an appropriate length of pipe insulation 1 from a reel of pipe insulation and feeds the pipe insulation 1 into the condensate drain pipe 30 when disconnected from the wall 36 of the dwelling 34.

Having fed the pipe insulation 1 along the length of the condensate drain pipe 30, the installer connects the dwelling wall side 36 end of the pipe insulation 1 to the internally run condensate pipe 32 using a cap 38 made from plastics material which runs between the conduit 3 interior and the internal drain pipe interior to form a water tight seal. Alternatively, the cap 38 may effectively seal the end of the insulating material whilst leaving the end of the conduit 3 open so that, when the pipe insulation is inserted into the pipe inlet, fluid will flow down the conduit 3 without wetting the insulating material 5. In this way, the conduit 3 replaces the external condensate drain pipe as the flow channel and permits the condensate to flow freely and safely away from the condensing boiler.

When installed, the pipe insulation 1 creates several layers of insulation. A first insulating layer comprises the plastic wall of the condensate drain pipe, a second insulating layer comprises a layer of air 40 trapped between the insulating material 5 exterior and the condensate drain pipe interior, a third insulating layer comprises the insulating material 5 itself, a fourth insulating layer comprises the pockets of air trapped in the channels 15 surrounding the conduit 3 and a fifth insulating layer comprises the plastic wall of the conduit 3. Thus, the condensate running through the conduit 3 interior is well insulated from external environment conditions.

The flow of condensate through the conduit 3 is facilitated by the ribbed structure. Firstly, condensate running through the conduit 3 becomes trapped in the depressions formed by the ribs 9 along the conduit interior due to water surface tension thereby causing the conduit interior to be partially lined with water. Water tends to flow better over a film of water than the plastic surface of the tube interior and so the rate of flow of condensate along the ribbed structure is increased. Secondly, the ribbed structure gives rise to a more graduated curvature when installed around a sharp bend in a condensate pipe thereby serving to straighten the bend and improve condensate flow which might otherwise collect at a bend. The combination of the increased number of insulating layers and the increased flow of condensate helps to keep the condensate from freezing even in very low, sub-zero temperatures, thereby reducing the risk of the condensate pipe freezing up and becoming blocked.

In an alternative embodiment, the insulating means may comprise a series of fins disposed to and extending from the outside of the conduit. The fins are arranged around the conduit, parallel to one another and at intervals along the length of the conduit. The fins extend substantially perpendicularly out from the outside surface of the conduit a distance approximately equal to the distance between the outside surface of the conduit and the inner surface of the drain pipe when the conduit is centrally located within the pipe. Thus, the fins maintain the surface of the conduit away from the walls of the pipe so that a thermally insulating layer of air surrounds the conduit.

The above embodiments are described by way of example only; many variations are possible without departing from the invention as defined by the appended claims.

## Claims

1. Pipe insulation adapted to be inserted into a pipe, the pipe insulation comprising a conduit through which fluid may flow and insulating means disposed to the outside of the conduit and arranged such that, when the pipe insulation is inserted into a pipe, the insulating means serves to restrict the transfer of thermal energy between the conduit and the pipe, wherein the conduit and the insulating means are flexible.

2. Pipe insulation as claimed in claim 1, wherein the insulating means comprises a material having insulating properties.

3. Pipe insulation as claimed in any preceding claim, wherein the insulating means comprises one or more formations arranged, in use, to space the outside of the conduit from the pipe.

4. Pipe insulation as claimed in claim 2 or claim 3, wherein the material covers at least a substantial part of the conduit.

5. Pipe insulation as claimed in claim 4, wherein the material is substantially annular in cross section.

6. Pipe insulation as claimed in any of claims 2 to 5, wherein the material is resiliently compressible.

7. Pipe insulation as claimed in any preceding claim, wherein the conduit is ribbed.

8. Pipe insulation as claimed in claim 7, wherein the ribs and insulating means are arranged to define channels inside which air may be trapped.

9. A pipe containing pipe insulation as claimed in any of claims 1 to 8.

10. A pipe as claimed in claim 9, wherein the pipe is a condensate drain pipe.

11. A heating appliance having a condensate drain pipe, wherein pipe insulation as claimed in any of claims 1 to 8 is disposed inside the drain pipe.

12. A method of insulating a pipe comprising the steps of:
providing a length of pipe insulation according to any of claims 1 to 8;
and
inserting the pipe insulation into a pipe;

13. A method of insulating a pipe as claimed in claim 12, including the additional step of connecting the pipe insulation to the inlet of the pipe.

14. A method as claimed in claim 13, comprising the additional step of:
arranging the pipe insulation so that the inlet is connected to the conduit.
